Europäisches Patentamt

European Patent Office

Office européen des brevets

(11) Veröffentlichungsnummer : **0 169 257**
**B1**

(12) **EUROPÄISCHE PATENTSCHRIFT**

(45) Veröffentlichungstag der Patentschrift :
09.09.87

(21) Anmeldenummer : 84108764.6

(22) Anmeldetag : 25.07.84

(51) Int. Cl.⁴ : **B 65 G 53/30**

(54) Verfahren zur hydraulischen Förderung von Feststoffen und Vorrichtung zur Durchführung des Verfahrens.

(30) Priorität : 27.06.84 DE 3423631

(43) Veröffentlichungstag der Anmeldung :
29.01.86 Patentblatt 86/05

(45) Bekanntmachung des Hinweises auf die Patenterteilung : 09.09.87 Patentblatt 87/37

(84) Benannte Vertragsstaaten :
AT BE CH DE FR GB IT LI LU NL SE

(56) Entgegenhaltungen :
AT-B- 208 768
US-A- 1 908 220
US-A- 4 053 184

(73) Patentinhaber : PREUSSAG Aktiengesellschaft Metall
Rammelsberger Strasse 2
D-3380 Goslar 1 (DE)

(72) Erfinder : Janssen, Klaus, Dipl.-Ing.
Kaisertorstrasse 3
D-3380 Goslar 1 (DE)

(74) Vertreter : Rücker, Wolfgang, Dipl.-Chem.
Hubertusstrasse 2
D-3000 Hannover 1 (DE)

**Beschreibung**

Die Erfindung betrifft gemäß dem Oberbegriff des Anspruchs 1 ein Verfahren zur hydraulischen Förderung von Feststoffen und gemäß dem Oberbegriff des Anspruchs 4 eine Vorrichtung zur Durchführung des Verfahrens. Derartige Verfahren u. Vorrichtungen im Kohlenbergbau sind in der AT-B-208 768 beschrieben. Hierbei wird die Kohle in mit Druckwasser gefüllte Rohrleitungen eingeführt und so zutage gehoben.

Ein wesentliches Problem der hydraulischen Feststofförderung ergibt sich aus der mit Feststoffkorngröße, Feststoffkonzentration und Förderdruckbedarf zunehmenden Schwierigkeit, geeignete Pumpen zu finden. Je höher der erforderliche Förderdruck liegt, umso unbeherrschbarer wird der Verschleiß der Pumpen, wenn der zu fördernde Feststoff den Pumpen mit aufgegeben wird.

Man behilft sich daher bei diesen hydraulischen Förderanlagen z. B. mit sogenannten Rohrkammeraufgebern, Vorrichtungen, die es erlauben, gewisse Mengen des hydraulischen Förderstroms als Feststoffsuspension in Rohrschleifen, sogenannten Rohrkammern, bereitzustellen und mittels eines taktgesteuerten Öffnens und Schließens von Schiebern anschließend in die Förderleitung einzuschleusen. Hierbei erfolgt eine Trennung von Hochdruckpumpen und Feststoff.

Nachteilig bei diesem Verfahren ist jedoch der Umstand, daß sich der Feststoff in den Rohrkammern absetzt, sobald die Förderung bei geschlossenen Schiebern unterbrochen ist. Das erneute Aufwirbeln des abgelagerten Materials erfordert im Vergleich zum eigentlichen Fördervorgang höhere Fördergeschwindigkeiten, was gleichbedeutend ist mit einem höheren Energiebedarf und daraus resultierend wieder einem stärkeren Rohrverschleiß. Außerdem führt ein solches Verfahren zu einer Ungleichförmigkeit der Feststoffbelastung der Suspension, sowohl was die Gesamtfeststoffmenge anbetrifft als auch die Masse der Feststoffteilchen. Dies wiederum bedeutet eine Herabsetzung der Effektivität der Fördervorganges.

Ein weiterer großer Nachteil ist außerdem der Einsatz von Schiebern an den Rohraufgebern, wodurch ein beträchtlicher Steueraufwand zur Betätigung der Schieber erforderlich ist und ebenfalls ein erheblicher Verschleiß an den Schiebern eintritt.

Das Rohrkammeraufgeberverfahren hat jedoch Grenzen seines Einsatzes, und zwar bei der Förderung eines Gemisches verschiedener Feststoffe mit unterschiedlichen, insbesondere relativ stark abweichenden Wichten. Dabei nämlich lagern sich die Feststoffe mit höherem spezifischem Gewicht in dem Rohrkammeraufgeber ab und werden vom Strom des Fördermediums nur bei besonders hoher Geschwindigkeit wieder aufgewirbelt, so daß aus Energie- und aus Verschleißgründen das hydraulische Fördern unwirtschaftlich wird.

Aufgabe der vorliegenden Erfindung ist es, ein Verfahren u. eine Vorrichtung zur Durchführung dieses Verfahrens vorzuschlagen, welche die oben geschilderten Nachteile der bekannten Einrichtungen und Verfahren nicht aufweisen, wenigstens aber in beträchtlich verringertem Umfang, so daß das hydraulische Fördern fortschrittlich auf alle Feststoffe und Feststoffgemische mit einfachen apparativen Einrichtungen anwendbar ist.

Gelöst wird diese Aufgabe erfindungsgemäß durch den Kennzeichnen Teil des Anspruchs 1 bzw. 4.

Bei diesem Verfahren wird also zunächst eine hochkonzentrierte Suspension erzeugt, die dann in das feststofffreie, mit entsprechend hoher Geschwindigkeit strömende eigentliche Fördermedium druck- und strömungstechnisch günstig eingeschleust wird. Das Fördermedium ist hier natürlich vorwiegend Wasser. Der Dickstoff bzw : die hoch an Feststoffen konzentrierte Suspension werden mit an sich bekannten Einrichtungen, beispielsweise Kolbenpumpen, gefördert, während das feststofffreie eigentliche Fördermedium vermittels Hochdruckkreiselpumpen den erforderlichen Druck und die erforderliche Strömungsgeschwindigkeit erbringt.

Die Einschleusung des Dickstoffes in die eigentliche Förderleitung mit der feststofffreien Flüssigkeit geschieht unter Druck und strömungsgünstigen Bedingungen.

Bei dem erfindungsgemäßen Verfahren wird also der Feststoff erst nach den Hochdruckpumpen in den Fördervorgang eingepreßt bzw. eingeschleust. Der Ferststoff kommt also nicht mit den Hochdruckpumpen des hydraulischen Fördermediums in Berührung, so daß dadurch kein Verschleiß entstehen kann. Durch die Verwendung einer hochkonzentrierten Suspension ist eine genaue Dosierung der Feststoffmenge, wie sie zur optimalen Durchführung der hydraulischen Förderung notwendig ist, möglich, und unter Verwendung der handelsüblichen Kolbenpumpen lassen sich auch die erforderlichen hohen Drücke erzeugen.

Bei der Einschleusung des Feststoffes in die Leitung des hydraulischen Fördermediums findet eine gleichmäßige Verteilung der Festoffpartikel in dem Medium statt und eine Beschleunigung auf die Fördergeschwindigkeit, weil das Fördermedium eine turbulente Strömung aufweist, so daß eine Verwirbelung und Verteilung der Feststoffpartikel erzwungen wird. Eine Beschleunigung des eingeschleusten Feststoffes auf Fördergeschwindigkeit stellt daher kein Problem dar.

Auch eine Differenzierung des Schlupfes der Feststoffpartikel unterschiedlicher Wichte gegenüber der Fördergeschwindigkeit führt nicht zu Entmischungen. In ungünstigen Durchmischungs- und Beschleunigungsfällen können durch Veränderung der Querschnitte der Förderleitung Veränderungen der Strömungsgeschwindigkeit und zusätzlich Wirbelbildung im Förderstrom herbeigeführt werden, so daß eine aktivierte Beschleunigung und Durchmischung des Mediums und des Feststoffes eintritt. Insbesondere bei nichtvertikaler hydraulischer Förderung und bei einer Fördergeschwindigkeit nahe der kritischen Schwebegeschwindigkeit bei niedriger Zähigkeit der Suspension sind diese erfinderischen Maßnahmen von überraschendem Vorteil.

So kann in Verfolg des erfinderischen Gedankens die Förderleitung an der Stelle der Einschleusung des Dickstoffes tailliert sein, so daß eine Erhöhung der Strömungsgeschwindigkeit und damit eine Steigerung des Mitreiß- und des Verwirbelungseffektes eintritt. Außerdem fällt bei erhöhter Geschwindigkeit der statische Druck im Bereiche der Einschnürung oder Taillierung, so daß der erforderliche Überdruck, mit welchem der Dickstoff eingeschleust wird, herabgesetzt werden kann.

An eine solche Einschnürung in der Förderleitung kann sich auch eine Querschnittserweiterung abrupt anschließen, so daß eine zusätzliche Verwirbelung stattfindet. In der sich dann anschließenden Zone der sich wieder verjüngenden Leitung auf Förderleitungsrohrdurchmesser findet dann eine strömungsgünstige Beschleunigung der Fördergeschwindigkeit statt. Die Feststoffördersäule in der Leitung, die den Dickstoff zuführt, wirkt bei vertikaler Förderung bei Förderstillstand als Dichtungspfropfen gegen das unter Druck stehende Fördermedium in der Hauptförderleitung.

Das erfindungsgemäße Verfahren ist besonders interessant bei seiner Anwendung unter Bergwerksverhältnissen, denn dann kann es von Bedeutung sein, die Dickstofförderung nicht nur zur unmittelbaren Festoffaufgabe in das Fördermedium zu verwenden, sondern in ausgedehnten und verzweigten Grubengebäuden von verschiedenen dezentralen Punkten aus fördergerecht zerkleinertes Fördergut einer zentralen Aufgabestelle der hydraulischen Förderung als Dickstoff auch über größere Entfernungen zuzuführen.

Das erfindungsgemäße Verfahren soll nun anhand der Zeichnung noch einmal erläutert werden, und zwar stellen in der Zeichnung dar :

Figur 1 das schematische Fließbild des erfindungsgemäßen Verfahrensprinzips und

Figur 2 verschiedene Ausgestaltungen zur druck- und strömungsgünstigen Einspeisung des Dickstoffes in die eingentliche feststofffreie Förderleitung.

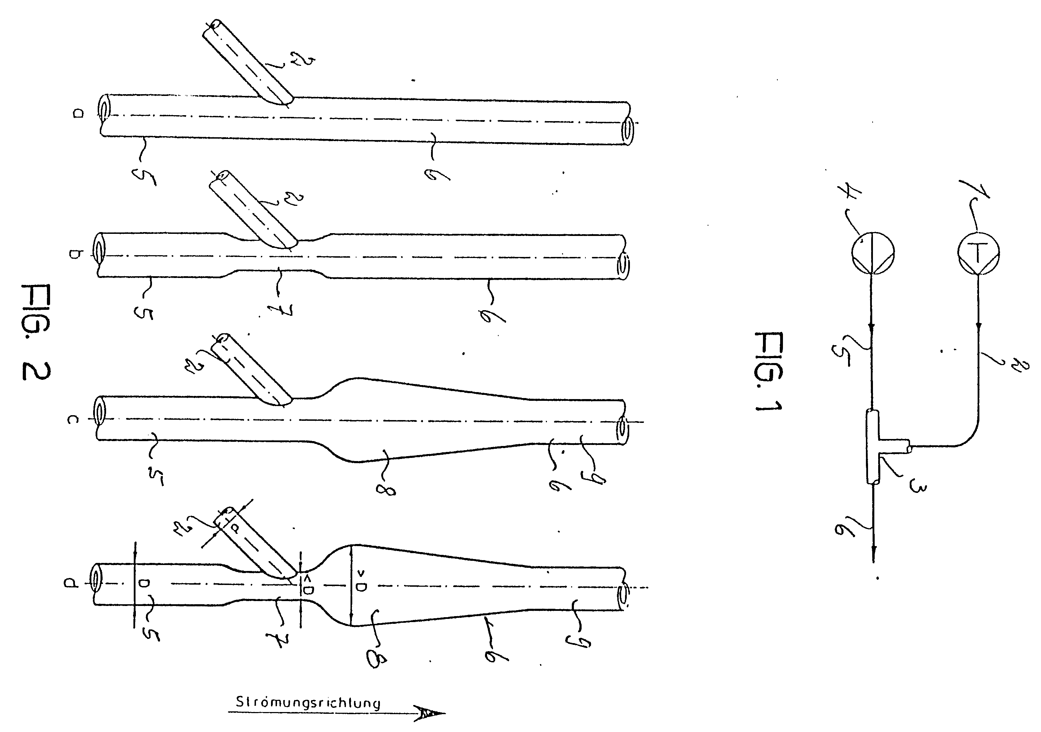

In Fig. 1 bezeichnet das Bezugszeichen 1 eine hohe Drücke erzeugende Pumpe, vorzugsweise eine Kolbenpumpe, die eine hochkonzentrierte vorzugsweise wäßrige Suspension, einen sogenannten Dickstoff aus einer in der Fig. 1 nicht dargestellten Mischvorrichtung ansaugt und in die Leitung 2 einspeist. Diese Leitung 2 führt zu einer Einspeisungsstelle in Form einer Einschleusvorrichtung 3, die weiter unten noch ausführlich mit Bezug auf Fig. 2 beschrieben werden wird. Das Bezugszeichen 4 bezeichnet eine hohe Drücke und hohe Strömungsgeschwindigkeiten erzeugende Pumpe für das eigentliche hydraulische Fördermedium, also Wasser, das aber feststofffrei ist. Dieses Fördermedium strömt durch die Leitung 5 und empfängt in der Einschleusvorrichtung 3 den hydraulisch zu fördernden Feststoff aus der Leitung 2. In der Leitung 6 liegt dann eine niedriger konzentrierte Wasser/Feststoffsuspension vor, die die erforderliche Strömungsgeschwindigkeit besitzt, um den Feststoff zu fördern und zu transportieren.

Wenngleich in Fig. 1 die Hauptförderleitung 5 mit dem feststofffreien Fördermedium horizontal verläuft, so kann dies natürlich auch nach oben oder nach unten gerichtet sein, und die Einschleusvorrichtung 3 kann auch in einem vertikalen Rohrleitungsstrang angeordnet sein.

Die Einschleusvorrichtung kann verschiedene Gestalt haben. In Fig. 2a bezeichnet das Bezugszeichen 6 die eigentliche hydraulische Förderleitung in Übereinstimmung mit Fig. 1. Die den Dickstoff heranführende Leitung trägt wie in Fig. 1 das Bezugszeichen 2. Das Bezugszeichen 5 bezeichnet den Rohrleitungsabschnitt ebenfalls entsprechend Fig. 1, indem reines Fördermedium vorhanden ist, also noch kein Feststoff, der erst im Bereich der Einmündung der Rohrleitung 2 in die Förderleitung 6 eintritt.

Zur Verbesserung der Verwirbelung und der Suspension der Feststoffe in dem eigentlichen Fördermedium überhaupt ist im Bereich der Einmündung der Rohrleitung 2 gemäß Fig. 2b eine Einschnürung 7 vorhanden, so daß in diesem Bereich ein Druckabfall eintritt, aber eine Steigerung der Strömungsgeschwindigkeit, so daß der Förderdruck des Dickstoffes in der Leitung 2 entsprechend verringert sein kann, die Erhöhung der Strömungsgeschwindigkeit in der Hauptförderleitung 5, 6 aber eine günstige Verwirbelung der Feststoffe bewirkt.

Fig. 2c zeigt eine abrupte Erweiterung des Querschnitts der Förderleitung 6 bei 8. Durch diese abrupte Querschnittserweiterung tritt eine zusätzliche Verwirbelung vermittels Wirbelringbildung in der Förderleitung 6 ein und in der sich anschließenden Zone der Verjüngung des Förderleitungsquerschnitts bei 9 findet eine strömungsgünstige Beschleunigung der Fördergeschwindigkeit statt.

Die Fig. 2d kombiniert die Effekte der Ausgestaltung der Einschleusvorrichtung nach Fig. 2b und 2c.

Das erfindungsgemäße Verfahren und die zur besonders vorteilhaften Verwirklichung vorgeschlagenen Vorrichtungen, insbesondere an der Einschleusungsstelle des Dickstoffes in das eigentliche hydraulische Fördermedium, haben überraschenderweise gezeigt, daß damit Feststoffe der unterschiedlichsten Art und unterschiedlichster Wichte und Körnung mit einem Minimum an Verschleißerscheinungen und erheblicher Einsparung an Energie unter allen praktischen Bedingungen gefördert werden können, so daß der hydraulischen Förderung damit Möglichkeiten erschlossen sind, die aufgrund der oben geschilderten Nachteile bisher verwehrt waren.

Der Begriff Dickstoff oder Dickstofförderung, wie er hier in der Anmeldung benutzt wird, bezeichnet eine Feststoffpackung, bei der jeder Packungsporenraum, der von beieinanderliegenden gröberen Partikeln gebildet wird, von jeweils feineren Partikeln überfüllend geschlossen wird und wobei weiter jedes Feststoffpartikel von einem dessen lokale Verschiebung ermöglichenden Wasserfilm überzogen ist.

## Patentansprüche

1. Verfahren zur hydraulischen Förderung von Feststoffen, z. B. von Kohle im Kohlenbergbau, dadurch gekennzeichnet, daß der Feststoff in förderfähiger Körnung soweit mit Flüssigkeit versetzt wird, daß sich eine Feststoffpackung ergibt, bei der jedes Feststoffpartikel von einem dessen lokale Verschiebung ermöglichenden Wasserfilm überzogen ist und jeder Packungsporenraum, der von beieinanderliegenden gröberen Partikeln gebildet wird, von jeweils feineren Partikeln überfüllend geschlossen wird und die unter Druck in ein feststofffreies, mit entsprechend hoher Geschwindigkeit strömendes, eigentliches hydraulisches Fördermedium eingeschleust wird.

2. Verfahren nach Anspruch 1, dadurch gekennzeichnet, daß die Einschleusung des Dickstoffes an einer solchen Stelle in das feststofffreie Fördermedium erfolgt, an der durch Querschnittsveränderungen in der Förderleitung druck- und strömungsgünstige Bedingungen für die Einspeisung erhalten werden.

3. Verfahren nach Anspruch 1 und 2, dadurch gekennzeichnet, daß die Einspeisung des Dickstoffes in das dickstofffreie Fördermedium dosiert vorgenommen wird.

4. Vorrichtung zur Durchfürung des Verfahrens nach den Ansprüchen 1 bis 3, dadurch gekennzeichnet, daß die Einspeisungsstelle (3) in der feststofffreien Förderleitung (5) Verengungen (7) und/oder Erweiterungen (8) des Strömungsquerschnitts oder eine Kombination derartiger Maßnahmen aufweist.

5. Vorrichtung nach Anspruch 4, dadurch gekennzeichnet, daß die Einspeisung des Dickstoffes in das feststofffreie Fördermedium dosiert unter Verwendung einer handelsüblichen Kolbenpumpe (1) erfolgt, während die Erzeugung der erforderlichen Strömungsgeschwindigkeit des feststofffreien Fördermediums unter Verwendung von Zentrifugalpumpen (4) erfolgt.

## Claims

1. Process for conveying solids hydraulically, e. g. coal in a coal mine, characterized by the fact that the solid, of a granulation making it suitable for conveyance, is re-arranged by liquid in such a way that packing of the solid results, whereby each particle of solid is covered by a film of water, making its local displacement possible, and every void area in the packing formed by coarser particles lying adjacent to one another, is in each case closed off by an overfill of finer particles, and the packed mass is introduced under pressure into a true hydraulic conveying medium free of solids, flowing at a correspondingly high speed.

2. Process in accordance with claim 1, characterized by the fact that introduction of the compacted material into the solids-free conveying medium takes place at a point such that, through changes in cross-section of the conveying conduit, conditions of pressure and flow favourable to input are maintained.

3. Process in accordance with claims 1 and 2, characterized by the fact that inward feed of the solid material into the solids-free conveying medium is conducted in measured amounts.

4. Device for implementing the process in accordance with claims 1 to 3, characterized by the fact that the point of introduction (3) in the solids-free conveying conduit (5) has constrictions (7) and/or enlargements (8) of the cross sectional area of flow or a combination of such features.

5. Device in accordance with claim 4, characterized by the fact that input of solid into the solids-free conveying medium takes place in measured quantities by using a commercially-available plunger pump (1), while achievement of the necessary speed of flow of the solids-free conveying medium is effected by using centrifugal pumps (4).

## Revendications

1. Procédé pour le transport hydraulique de matières solides, par exemple de charbon dans les mines de charbon, caractérisé en ce que la matière solide, se présentant sous une granulométrie apte au transport, est additionnée d'un liquide jusqu'à ce que l'on obtienne un liquide chargé à consistance élevée, dans lequel chaque particule de matière solide est revêtue d'un film d'eau qui en permet le déplacement local, et chaque pore du liquide chargé, formé par des particules plus grossières situées les unes à côté des autres, est dans chaque cas obturé complètement par des particules plus fines, et que l'on injecte le fluide de transport, et qui est injectée sous pression dans un fluide de transport, à proprement parler hydraulique, exempt de matières solides et s'écoulant à une vitesse en conséquence élevée.

2. Procédé selon la revendication 1, caractérisé en ce que l'injection du liquide chargé s'effectue dans le fuide de transport exempt de matières solides en un point où. grâce à des modifications de la section de la conduite de transport, se maintiennent des conditions d'injection favorables du point de vue de la pression et de l'écoulement.

3. Procédé selon la revendication 1 ou 2, caractérisé en ce que l'injection du liquide chargé dans le fluide de transport exempt de matières solides est effectuée d'une manière dosée.

4. Dispositif pour la mise en œuvre du procédé selon les revendications 1 à 3, caractérisé en ce que le point d'injection (3) dans la conduite de transport (5) exempte de matières solides présente des rétrécissements (7) et/ou des évasements (8) de la section d'écoulement, ou une combinaison de mesures de ce genre.

5. Dispositif selon la revendication 4, caractérisé en ce que l'injection du liquide chargé dans le fluide de transport exempt de matières solides s'effectue d'une manière dosée à l'aide d'une pompe à piston (1) du commerce, tandis que la production de la vitesse nécessaire d'écoulement du fluide de transport exempt de matières solides s'effectue par l'utilisation de pompes centrifuges (4).

FIG. 1

FIG. 2

Strömungsrichtung